# EUROPEAN PATENT SPECIFICATION

(11) **EP 2 387 323 B1**
(45) Date of publication and mention of the grant of the patent: **12.03.2014**
(21) Application number: 10731112.8
(22) Date of filing: 19.01.2010
(51) Int. Cl.: A23G 9/00, A23G 9/04, A23G 9/12, A23G 9/22

(54) **APPARATUS FOR DISPENSING MADE-TO-ORDER FROZEN BEVERAGE**
VORRICHTUNG ZUR AUSGABE EINES AUF BESTELLUNG HERGESTELLTEN GEFRORENEN GETRÄNKS
APPAREIL DE DISTRIBUTION DE BOISSON GLACÉE PRÉPARÉE SUR COMMANDE

(30) Priority: 19.01.2009 US 145660 P; 30.03.2009 US 164488 P
(43) Date of publication of application: 23.11.2011
(73) Proprietor: Nicevend Ltd., 49945 Neve Yarak (IL)
(72) Inventor: KLIER, Niri, 56500 Savyon (IL); GRANOT, Boaz, 63302 Tel Aviv (IL)
(74) Representative: Watterson, Peer Marten John
(86) International application number: PCT/IB2010/050234
(87) International publication number: WO 2010/082185

(56) References cited:
- WO-A1-2007/091062
- US-A1- 2002 131 324
- US-A1- 2006 147 601
- US-A1- 2006 207 270
- US-A1- 2007 119 867
- US-A1- 2007 193 299
- US-A1- 2008 066 483

## Description

### FIELD OF THE INVENTION

The present invention relates to the field of producing frozen drink-mixtures and more particularly, the present invention relates to a novel method and apparatus for producing a flavored ice beverage from ice flakes and a selected liquid portion of the ice beverage, whereas the ice flakes and the liquid portion are freshly mixed and dispensed.

### BACKGROUND OF THE INVENTION AND PRIOR ART

The term "ice beverage", as used herein, refers to a beverage being in a slush state, that is a pourable mixture of ground ice and liquid, wherein the mixture is generally homogeneous. The quantity of liquid may also be nil. The ground ice is composed of ice particles or ice flakes. The terms "ice particles" and "ice flakes" are used herein interchangeably. The terms "blender" and "blending unit" are also used herein interchangeably.

A common prior art method for producing ice beverages, which can be continuously and instantaneously supplied, uses device having a liquid mixture which is chilled to a partial frozen state, while being continuously mixed. The disadvantage of the method is the short shelf-life of the mixture. Moreover, the process of preparing the ice beverage may involve manual control which has to be done by trained personal .The device may not operate automatically and may need continuous supervision when an ice beverage is requested. Furthermore, the process of cooling the liquid into a ready to serve ice beverage, typically takes between 20-60 minutes, during which time the ice beverage cannot be served.

Other prior art devices for dispensing ice beverages, such as vending machines, do not have the capacity needed to ensure a non-stop supply of a large numbers of servings by a single machine. Existing vending machines suffer from a short shelf life, due to the method operation. Moreover, the vending machines offer a limited variety of favored ice beverages.

Prior art devices for dispensing flavored ice beverages do produce the flavored ice portion of the beverage and the liquid portion of the beverage with the same process, thereby the two portions of the beverage cannot be controlled to repeatably contain the same content and thereby producing an ice beverage which has substantially the same content and the same flavor.

Another prior art apparatus for dispensing flavored ice beverages, is described in PCT application WO 2008/032306, by Ehud Klier et al., the disclosure of which is incorporated by reference for all purposes as if fully set forth herein. The apparatus includes one or more containers for holding a concentrated drink, water supply, a mixing unit for mixing the concentrated drink with the water into a substantially homogeneous liquid mixture, an ice making unit assembly for freezing at least a portion of the freshly produced liquid mixture into ice cubes containing substantially identical ice quantity, a crushing and blending unit for crushing a pre measured amount of the ice cubes into small, drinkable ice particles, and blending the ice particles with a pre measured amount of freshly produced liquid mixture.

There is a need for and it would be advantageous to have a made-to-order apparatus for dispensing freshly prepared frozen beverage having a controlled balance of liquid and ice.

US 2007/193299 A1 discloses an ice crusher which is attached to an ice dispenser or to a combined ice and beverage dispenser. As the ice flows from a source of ice, such as an ice bin, the ice is elevated while it is being crushed. The ice then flows from the outlet of the ice crusher down an ice chute or other outlet of the ice crusher, into a cup or container as desired. In other embodiments the ice is conveyed without lifting it, and still other embodiments either crushed or cubed ice, as the consumer may select, is dispensed. In one embodiment the selected crushed ice or cubed ice are both dispensed though the same ice dispensing chute. A retrofit kit may be used to add an ice crusher to an existing ice dispenser, or to an existing combined ice and beverage dispenser.

US2002131324 A1 discloses a frozen drink machine and a method for making frozen drinks from a frozen substance which has been frozen into a block. A block of frozen substance is held in a vessel while a rotatable blade having features for grinding the frozen substance, and if desirable, for aerating the ground frozen substance, acts on the block, grinding the frozen substance while a heated liquid is simultaneously introduced into the vessel. It is also disclosed an apparatus supporting a cup containing the frozen substance, and including a rotatable blade which is lowered into the cup and means for pumping a heated liquid into the cup.

### BRIEF SUMMARY OF THE INVENTION

A principal intention of the present invention includes an apparatus for dispensing a made-to-order, freshly prepared frozen beverage having a controlled balance of liquid and ice. The apparatus is preferably controlled by a computerized control unit and thereby the resulting ice beverages are substantially repeatable.

According to the teachings of the present invention, there is provided an apparatus for preparing and dispensing a flavored ice beverage, including at least one container for holding flavor ingredients, a blending unit including a blender container and a blending mechanism, an ice flakes supplying unit, a mechanism for transferring the flavor ingredients to the blender container and a computerized control unit for controlling one or more aspects of the process of producing the ice beverage. The flavor ingredients can be in grain form, powder form or in liquid form.

The ice flakes supplying unit includes an ice flakes making device for producing ice flakes, an ice flakes container, an ice flakes intermixing mechanism and a conveying mechanism for transferring the ice flakes from the ice flakes holding and mixing unit to the blender container. The ice flakes making device produces ice flakes that are generally of similar dimensions. The ice flakes intermixing mechanism intermixes the ice flake, such that substantially no ice mounds are piled up and such that the lower part of the ice flakes container is filled with a substantially uniform mixture of the ice flakes.

Optionally, the ice flakes intermixing mechanism includes a generally disc shaped rotating plate having two faces and a rotational axis, disc rods extending generally perpendicular from the faces of the plate, and wall rods extending generally perpendicular from the inner surfaces of the walls of the ice flakes container. The disc rods and wall rods may have various dimensions. Openings formed on the plate, away from the rim of the plate, facilitating a movement of portions of the ice flakes from one side of the plate to the other side of the plate. A rotating mechanism, preferably controlled by the computerized control unit, rotates the plate about the plate axis, in either direction. Optionally, the rotating mechanism rotates the plate back and forth about the plate axis, periodically. It should be noted that the plate faces may not be flat.

The mechanism for transferring the flavor ingredients transfers the flavor ingredients from the containers for holding flavor ingredients, to the blender container. The conveying mechanism for transferring the ice flakes, transfers the ice flakes from the ice flakes holding and mixing unit, to the blender container. Optionally, the conveying mechanism for transferring the ice flakes includes an Archimedes screw. The blending mechanism blends a pre-measured amount of the ice flakes, transferred from the ice flakes making unit, with a pre-measured amount of the flavor ingredients, transferred from the least one container, thereby producing the flavored ice beverage.

Preferably, the apparatus for preparing and dispensing a flavored ice beverage further includes a refrigerated housing, wherein the ice flakes supplying unit is disposed inside the housing. Preferably, the blending unit is also disposed inside the housing. Preferably, the housing is substantially sealed and the temperature inside the housing is controlled by the computerized control unit.

Preferably, the apparatus of for preparing and dispensing a flavored ice beverage further includes a liquid supplier of a base liquid, preferably water and a mechanism for transferring the base liquid to the blender container, wherein the mechanism for transferring the base liquid, transfers the base liquid from the liquid supplier to the blender container; and wherein the blending unit blends a pre-measured amount of the ice flakes, transferred from the ice flakes making unit, with a pre-measured amount of the flavor ingredients, transferred from the least one container, and a pre-measured amount of the base liquid, transferred from the supply of the base liquid, thereby producing the flavored ice beverage. The base liquid may be sparkled.

Preferably, the blending unit further includes a pivoting mechanism, wherein the pivoting mechanism facilitates pivotal motion of the blending unit.

Optionally, the ice flakes container includes a bottom surface having a first end and a second end, an opening formed at the first end of the bottom surface, facilitating the dispensing of the ice flake from the ice flakes container, and an opening formed at the second end of the bottom surface, facilitating the dispensing of accumulated water from the ice flakes container. The first end of the bottom surface is higher than the second end of the bottom surface, thereby, water accumulated on the bottom surface flows by the force of gravity towards the opening formed at the second end of the bottom surface. Optionally, the water dispensed from the opening formed at the second end of the bottom surface, is collected and is reused by the apparatus for preparing and dispensing a flavored ice beverage.

Preferably, the ice flakes container includes a sensing device for sensing the level of accumulated ice flakes inside the ice flakes container.

Optionally, the apparatus for preparing and dispensing a flavored ice beverage further incudes a protective cover unit coupled to protect the surroundings of the blending unit, particularly when the blending unit is in an operative state. Preferably, the protective cover unit includes a sealer, wherein the sealer seals the blending unit, the blending unit being in the blending state position.

Optionally, the apparatus for preparing and dispensing a flavored ice beverage further includes a washing unit for rinsing and optionally washing the inner surfaces of the blender container.

Optionally, the apparatus for preparing and dispensing a flavored ice beverage further includes a mixing unit for mixing the flavor ingredients and the base liquid, thereby producing a substantially homogeneous liquid mixture, wherein the blending unit blends a pre-measured amount of the ice flakes with a pre-measured amount of the liquid mixture thereby producing the flavored ice beverage.

Optionally, the liquid supplier is an operative connection to external water supply source. The liquid supplier may also be a container.

Optionally, the apparatus for preparing and dispensing a flavored ice beverage further includes a vessel dispensing unit.

Optionally, the apparatus for preparing and dispensing a flavored ice beverage further includes a straw dispensing unit,

An aspect of the present invention is to provide a method for preparing and dispensing a flavored ice beverage. The method includes providing an apparatus for preparing and dispensing a flavored ice beverage, wherein the apparatus includes an ice flakes supplying unit for producing ice flakes, at least one container for holding flavor ingredients and a blending unit. The blending unit includes a blender container, a blending mechanism and a pivoting mechanism, wherein the blender container includes a receiving opening formed preferably at the top of the blender container, and wherein the pivoting mechanism facilitates pivotal notion of the blending unit. The apparatus further includes a conveying mechanism for transferring the ice flakes from the ice flakes supplying unit to the blending unit, and a mechanism for transferring the flavor ingredients to the blending unit.

The method further includes the steps of selecting a flavored ice beverage, pivoting the blending unit to a receiving state position, wherein at the receiving state position, the blending unit is in position to receive the flavor ingredients and the ice flakes, transferring the flavor ingredients to the blending unit, transferring the ice flakes to the blending unit, pivoting the blending unit to a blending state position, wherein at the blending state position, the blending unit is in position is preferably inclined with respect to an upright position, activation the blending mechanism for a predetermined time interval, thereby producing the ice beverage, and delivering the ice beverage.

Preferably, in the receiving state position, the blending unit is in an upwardly position. Preferably, in the blending state position, the blending unit is substantially sealed. Optionally, the receiving state position and the blending state position are at the same pivotal position.

In variations of the present invention, the provided apparatus for preparing and dispensing a flavored ice further includes a liquid supplier of a base liquid, preferably water, and a mechanism for transferring the base liquid to the blending unit, and the method further including includes the step of transferring the base liquid to the blending unit, the blending unit being at the receiving state position.

In variations of the present invention, the provided apparatus for preparing and dispensing a flavored ice further includes an ice flakes intermixing mechanism, and the method further including includes the step of activating the ice flakes intermixing mechanism shuffle the ice flakes inside the ice flakes container, thereby maintain a substantially uniform mixture of ice flakes inside the ice flakes container.

In variations of the present invention, the provided apparatus for preparing and dispensing a flavored ice further includes a vessel dispensing unit, and the method further including includes the step of dispensing a cup from the a vessel dispensing unit, before the delivering of the ice beverage.

### BRIEF DESCRIPTION OF THE DRAWINGS

The present invention will become fully understood from the detailed description given herein below and the accompanying drawings, which are given by way of illustration and example only and thus not limitative of the present invention.
FIG. 1 is a schematic block diagram of au apparatus for preparing and dispensing flavored ice beverages, according to embodiments of the present invention;
FIG. 2 is a perspective view illustration of the apparatus for preparing and dispensing flavored ice beverages, as illustrated in Figure 1;
FIG. 3 is a perspective view illustration of the ice flakes supplying unit of the apparatus for preparing and dispensing flavored ice beverages shown in Figure 2;
FIG. 4 is a perspective view illustration of the lower part of ice flakes supplying unit, shown in Figure 3;
FIG. 5 is a top perspective view illustration of the protective cover unit coupled with the blending unit coupled to protect the surroundings of the blending unit of the dispensing flavored ice beverages shown in Figure 2;
FIG. 6 is a bottom perspective exploded view illustration of the protective cover unit shown in Figure 5;
FIG. 7a. is a side view illustration of the protective cover unit shown in Figure 5 coupled with the blending unit, which is in a receiving state;
FIG. 7b is a side view illustration of the protective cover unit shown in Figure 5 coupled with the blending unit, which is in a blending state;
FIG. 8 is a schematic flow diagram that outlines the successive steps of a process of for preparing and dispensing flavored ice beverage, from selecting a flavored ice beverage till the delivering the flavored ice beverage, performed by an apparatus as shown in Figures 1 and 2, according to embodiments of the present invention; and
FIG. 9 is a schematic flow diagram that outlines the successive steps of a variation of the process outlined in Figures 8.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided ,so that this disclosure will be thorough and complete, and will fully convey the scope of the invention to those skilled in the art.

Unless otherwise defined, all technical and scientific terms used herein have the same meaning as commonly understood by one of ordinary skill in the art to which this invention belongs. The methods and examples provided herein are illustrative only and not intended to be limiting.

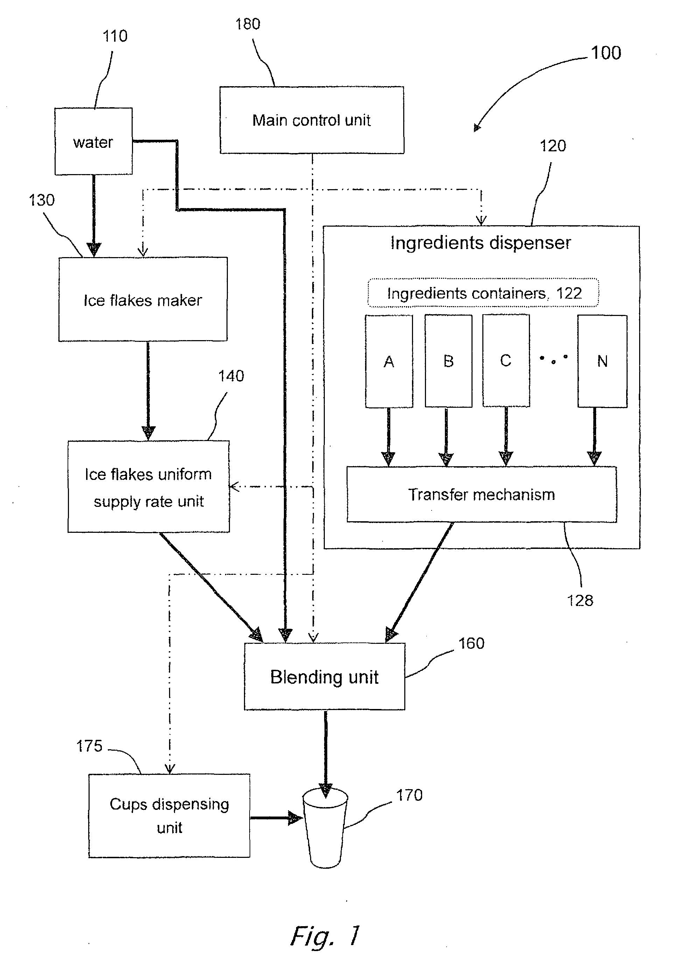

Reference now made to the drawings,. Figure 1 is a schematic block diagram of apparatus **100** for preparing and dispensing flavored ice beverages, according to embodiments of the present invention. Apparatus **100** includes water source **110**, flavour ingredients dispenser **120**, ice flakes supplying unit **140** including ice flakes maker **130**, blender **160** and optionally, cup dispensing unit **175**.

Flavor ingredients dispenser **120** can be embodied in any embodiment known in the art. for dispensing ingredients for the preparation of flavored liquid drinks. In the example shown in Figure 1, flavor ingredients dispenser **120** includes ingredients containers **122A** to **122N**, containing flavored concentrated or non-concentrated ingredients for making selected flavored drinks, such as juices, coffee, alcoholic drinks, chocolate and other flavored drinks. The concentrated ingredients can be in liquid form or preferably in powder form, which is characterized by a longer shelf life.

It should be noted that water source **110 c**an be a container **122** or an operative connection to external water supply source.

Ice flakes supplying unit **140** includes ice flakes maker **130**, which is a conventional ice flakes maker, facilitated to draw water from water source **110** through transfer mechanism **118**. Ice flakes maker **130** produces ice flakes 136, which are generally uniform in size, and which are dispensed through an opening **132** formed in ice flakes maker **130**, and which ice flakes **136** are dropped into ice flakes supplying unit **140**. Ice flakes supplying unit **140** is facilitated to transfer a repetitive, pre-measured quantity of ice flakes to blender 160, having a substantially uniform density, the transfer being controlled by control unit **180**. Computerized control unit **180** controls the level of uniform ice flakes accumulated inside ice flakes supplying unit **140**. In variations of the present invention, ice flakes maker **130**, which is a conventional ice flakes maker, facilitated to draw flavored liquid from a respective flavored liquid source. Ice flakes maker **130** then produces ice flakes **136** then produces from the flavored liquid.

Apparatus **100** further includes a substantially sealed housing (not shown), which housing is refrigerated to a predefined temperature, controlled by control unit **180**. In variations of the present invention, control unit **180** controllably monitors the temperature inside the housing such that the temperature does not surpass a predetermined threshold temperature. In frozen beverage preparation there are special system temperature control requirements in order to optimize the system performance and subsequent beverage quality. In one embodiment, there are two separate compartments which are independently temperature controlled. In a particular embodiment, an inner compartment, controlled to a lower temperature is contained within an outer compartment. The inner compartment is typically where ice flakes **136** are produced. This architecture has the additional advantage of providing reduced refrigeration energy consumption and more accurate compartment temperature control.

When a selected flavored ice beverage is being prepared, selected flavor ingredients are transferred to blender **160**. Optionally,, a base liquid, preferably water from water supply unit **110**, is also transferred to blender **160**, whereas the ratio between the transferred ingredients from one or more containers, such as containers **122**, as well as the water, is controlled by a computerized control unit **180**. Ice flakes **136** are also transferred from ice flakes supplying unit **140** to blender **160**. The transferred quantities of flavor ingredients (from ingredients dispenser **120**) and uniform ice flakes **136** (from ice flakes supplying unit **140**) are controlled by a computerized control unit **180**. The present invention will be now described through preparing an ice beverage prepared with water, but the present invention is not limited to the usage of water as a base liquid and any other base liquid can be user, including milk, juice or any other drinkable liquid.

Blender **160** blends the selected flavor ingredients, ice flakes **136** and the water to the required texture of the ice beverage and pours the freshly prepared ice beverage to a cup **170**, which is synchronously dispensed from cups dispensing unit **175**, or manually place.

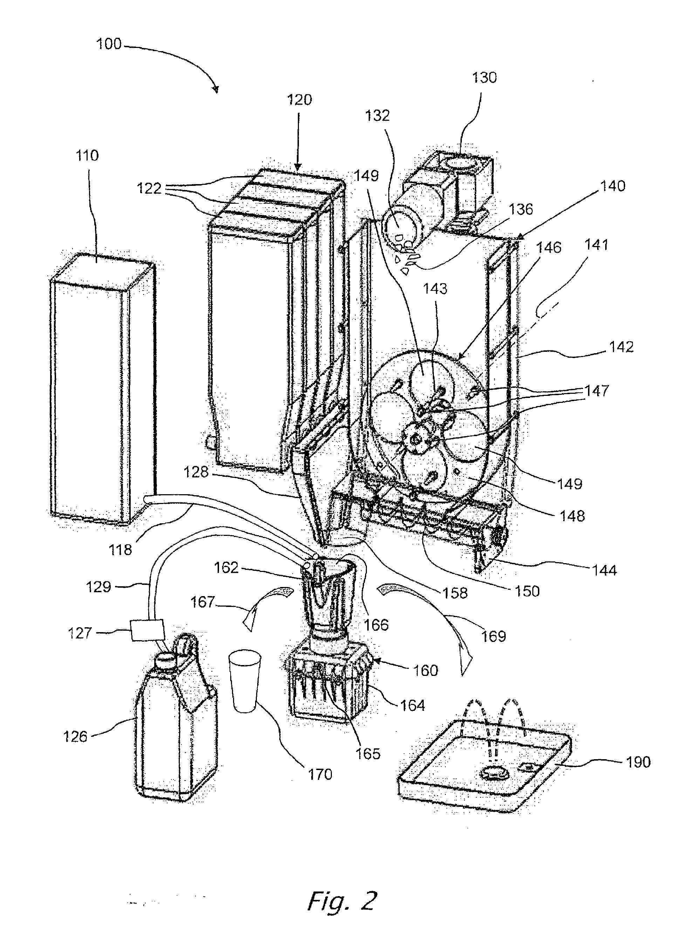

Reference is also made to Figure 2, which is a perspective view illustration of main components of an example apparatus **100** for preparing and dispensing flavored ice beverages, according to embodiments of the present invention. In this example, flavor ingredients dispenser **120** includes four containers **122**, each containing flavor ingredients, to be selected from Apparatus 10**0** may further include other containers of flavor ingredients, for example, container **126** containing concentrated flavored liquid.

When a container **122** or **126** is selected, computerized control unit **180** releases a pre-measured amount of the selected flavor ingredients, which flavor ingredients are then transferred through a mechanism **128** or **129**, respectively, for transferring the flavor ingredients to blending unit **160**. Transfer mechanisms **118**, and/or **129** may include additional transfer elements, such as a pump **127**.

In embodiments of the present invention, a stream of heated or cooled or ambient temperature water is used to carry powder flavor ingredients from dispensing mechanism **128** into blender. In a further embodiment, intermixing is preset and the dispensing mechanism is parallelized, i.e. a discrete set of predetermined mixes are available which are directly transferred to blending unit **160**.

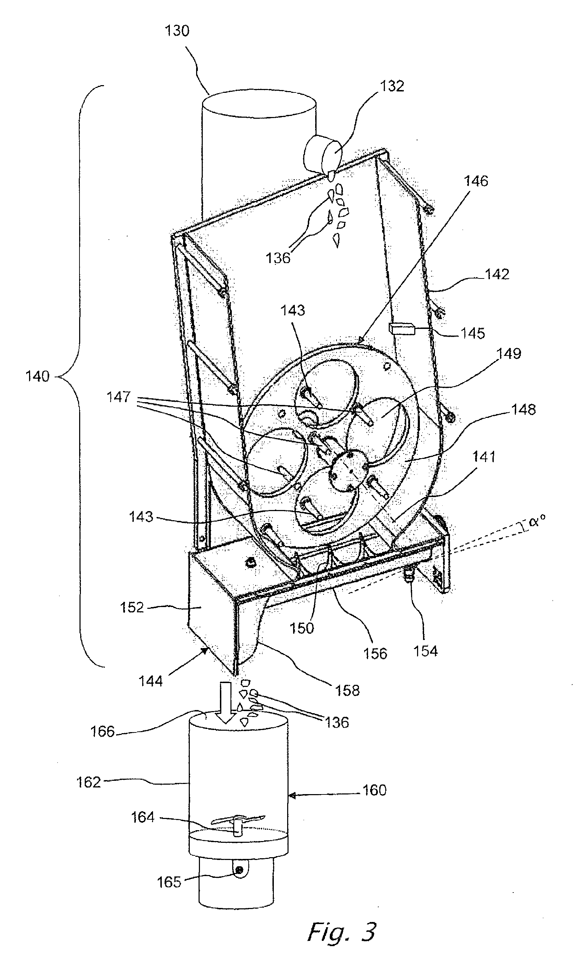

Reference is also made to Figure 3, which is a perspective view illustration of ice flakes supplying unit **140** of apparatus **100**. Ice flakes supplying unit **140** includes ice flakes maker 130, an ice flakes intermixing mechanism **146** and an ice flake container having lower part **144** and upper part **142**, which are combined into a single compartment and may be embodied from a single unit. Ice flakes maker **130** is disposed at the upper end of upper part **142** of ice flakes supplying unit **140**, producing ice flakes **136**, which are generally of similar dimensions, and which are dropped through an opening formed at the upper end of upper part **142**. In variations of the present invention, the upper end of upper part **142** of ice flakes supplying unit **140** includes a lid (not shown) having an opening through which ice flakes **136** drop into ice flakes supplying unit **140**.

Ice flakes supplying unit **140** further includes ice flakes intermixing mechanism **146**, which intermixes ice flake **136**, being dropped from ice flakes maker **130**, such that substantially no ice mounds are piled up and such that lower part **144** of ice flakes supplying unit **140** is filled with a substantially uniform mixture of ice flakes. Ice flakes supplying unit **140** further includes a conveying mechanism **150**, disposed inside lower part **144** of ice flakes supplying unit **140**. Ice flakes intermixing mechanism **146** can be embodied in various ways. In the example shown in Figures 2 and 3, ice flakes intermixing mechanism **146** includes disc shaped plate **148** on which rods **147,** having various dimensions, are affixed at various locations. Ice flakes intermixing mechanism **146** may further includes rods **143**, which are disposed on the inner walls of upper part **142.** Ice flakes intermixing mechanism **146** further includes openings **149** formed on plate **148** away from the rim of plate **148**, allowing ice flakes **136** to move from one side of plate **148** to the other side. Typically, ice flakes intermixing mechanism **146** rotates periodically, back and forth about axis **141**, whereas rods **147** and rods **143** intermix ice flakes **136**, to form and maintain a uniform mixture. It should be noted the plate **148** has a generally disc-like shape, but the present invention is not limited for plate **148** to have a disc-like form.

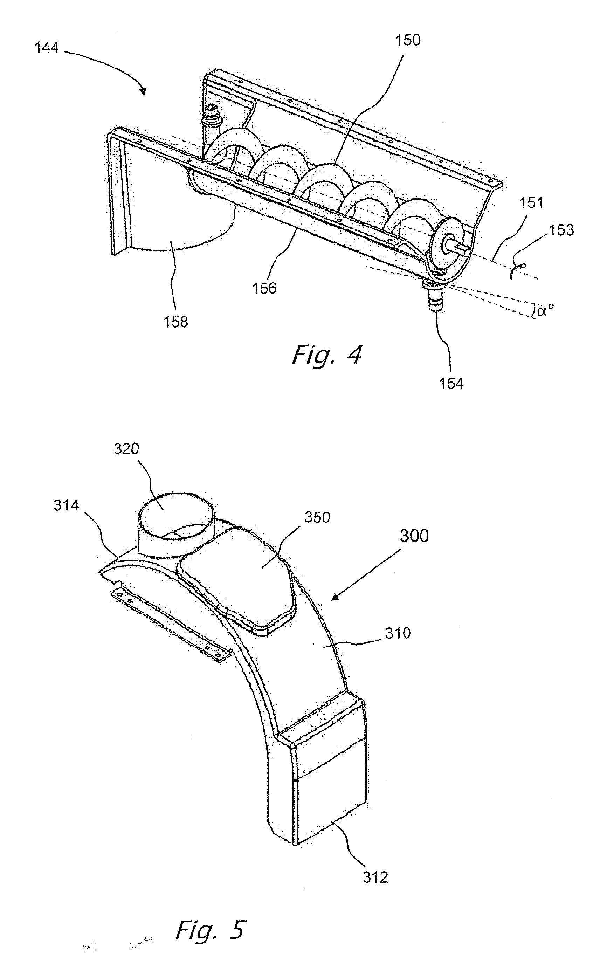

Reference is also made to Figure 4, which is a perspective view illustration of lower part 144 of ice flakes supplying unit **140**, including conveying mechanism **150** for transferring ice flakes 136 from ice flakes supplying unit **140** towards blender **160**. When conveying mechanism **150** is rotated about axis **151** in direction **153**, by a motor (not shown), ice flakes **136** are shoved through an opening formed by walls **158** and **152**, towards blender **160**. Optionally, conveying mechanism **150** includes an Archimedes screw.

Preferably, the bottom **156** of lower part **144** is slightly slanted, by an angle α°, such that the end bottom **156** proximal to wall **152** is higher than the other end of bottom **156**, distal from the front wall **152**. Thereby, any water accumulated at the bottom **156** of lower part **144**, flows by the force of gravity away from wall **158** and collected and optionally recycled, as the water flow out of lower part **144** through a draining pipe **154** disposed proximal to the end of bottom **156** distal from wall **152**.

Preferably, ice flakes supplying unit **140** further includes a sensing device **145** (see Figure 3) which senses the level of accumulated ice flakes **136** inside the ice flakes container. When the level of ice flakes **136** inside the ice flakes container is below some predetermined threshold level, control unit **180** activates ice flakes maker **130** to produce more ice flakes **136**. When the level of ice flakes **136** inside the ice flakes container is above some predetermined threshold level, control unit **180** deactivates ice flakes maker **130**.

Blender **160** includes a containing body **162**, having an opening formed at the top of containing body **162**, and a blending mechanism **164**. A pivoting mechanism facilitates the pivoting of blending unit **160** about axis **165**.

In an alternative architecture blending unit **160**, blender blade **164** is translated, for example in the vertical direction, independently of containing body **162**, in order to bring the blades into contract with the flavored ingredients, water and ice flakes, which have been transferred into containing body **162**. In a further embodiment, blender blade **164** is held stationary and containing body **162** is translated and or pivoted.

Control unit **180** also ensures that quantities and the ratio between the various flavor ingredients, water and ice flakes **136**, all of which are transferred into container **162** of blending unit **160** through opening **166**, are substantially repeatable. In blending unit **160**, the pre measured quantity of ice flakes **136** are blended by blending mechanism **164** with the pre measured quantity of ice flakes **136** and the pre measured quantity of water and flavor ingredients, thereby producing the requested flavored ice beverage. The freshly prepared flavored ice beverage is delivered into a vessel, such as cup **170**, which cup **170** is either dispensed from cup dispensing unit **175** or manually placed. The freshly prepared flavored ice beverage is delivered into the vessel by a pouring mechanism such as a mechanism that inclines blending unit **160** to a pre designed downwards angle, in direction **167** towards cup **170**. The inclination angle ensures a substantially repeatable pouring rate of the freshly prepared flavored ice beverage, which is timed by control unit **180.** The pouring rate of the freshly prepared flavored ice beverage can be variable, controlled by control unit **180**.

It should be noted that a number of different alternatives may be used to empty the ice beverage into cup **170**. In addition or instead of the option of pivoting blender **160**, as already described, a valve at the base of blender **160** may be opened to allow the contents to fall out into cup **170**. Alternately, blender 160 may be set at a fixed incline and a door could open in the lower side of blender **160**. An additional advantage of the fixed or variable incline architecture is that the blending action may be more affective as gravitational forces tend prevent the phase separation problem often observed in vertical blender architectures in which the blended material is not fully mixed but maintains a vertically layered structure. A further option in order to improve the effectiveness of blender **160** emptying step is the shaking or vibrating of blender 160, during pivoting to a pouring position, to ensure that the ice beverage falls into cup **170**, substantially in its entirety.

Preferably, in a receiving state, when the flavor ingredients, the water and ice flakes 136 are transferred into container **162** of blending unit **160** through opening 166, blending unit 160 is generally in a upright position, but can be inclined. Preferably, in a blending state, when blending unit **160** blends the flavor ingredients, the water and ice flakes **136**, blending unit **160** is slightly inclined with respect to the upright position. The inclination of blending unit **160** in the blending state, prevents the accumulation of ingredients on the inside walls of container **162**, thereby improving the uniformity of the flavored ice beverage being produced.

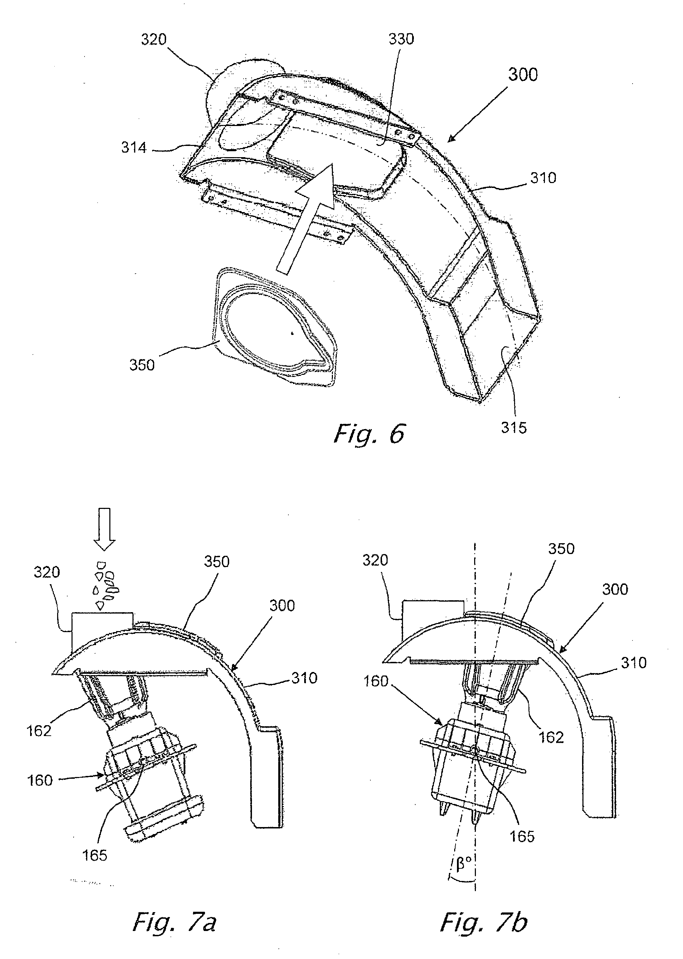

Preferably, ice flakes supplying unit **140** further includes a protective cover unit **300**, coupled to protect the surroundings of blending unit **160** in the various operating states. Reference is made to Figure 5, which is a top perspective view illustration of protective cover unit **300**; and to Figure 6, which is a bottom perspective exploded view illustration of the protective cover unit **300**.

Protective cover unit **300** includes a generally arched body **310**, an ingredients receiving part **320**, and a sealer **350** fittingly inserted into opening **330** formed in body **310**. Protective cover unit **300** is affixed in position inside apparatus **100**, while blending unit **160** can move just below protective cover unit **300**, depending on the working state of blending unit **160**.

Reference is also made to Figure 7a, which is a side view illustration of protective cover unit **300** coupled with blending unit **160**, wherein blending unit **160** is in a receiving state; and to Figure 7b, which is a side view illustration of protective cover unit **300** coupled with blending unit **160**, wherein blending unit **160** is in a blending state. When blending unit **160** is in a receiving state (see Figure 7a), blending unit **160** is in an upwardly position, wherein opening **166** is aligned with the opening formed in ingredients receiving part **320**, such that ingredients transferred to blending unit **160**, pass through the opening formed in ingredients receiving part **320**, and then through opening **166** of blending unit **160**.

When blending unit **160** is in a blending state (see Figure 7b), blending unit **160** is pivoted about axis **165**, to form an inclination angle or β° with respect to the upright position. The inclination of blending unit **160** in the blending state, prevents the accumulation of ingredients on the inside walls of container **162**, thereby improving the uniformity of the flavored ice beverage being produced. Sealer **350** is made of elastic materials such as rubber, and is designed to fittingly seal opening **166** of blending unit 160, when blending unit **160** is in a blending state. Thereby, when blending unit **160** is in a blending state, protective cover unit **300** prevents spattering of the ice beverage being prepared.

The use of ingredients which are perishable may in some cases make advisable or mandatory the periodic rinsing or optionally washing of blender container **162**. Rinsing or optionally washing of blender container **162** may also be required in order to eliminate residual flavor contamination between beverage. In embodiments of the present invention, the mechanism for pivoting blending unit **160** about axis **165**, inclines blending unit **160** to a washing state, in direction **169** (see Figure 2), towards washing unit **190** which washes and/or rinses blending unit **160**. Blending unit **160** is then pivoted back to the receiving state position, ready for the next requested for a made-to-order ice beverage. In variations of the present invention, blending unit **160** in not inclined towards a washing unit, but rather water and optionally soap are transferred into blending unit **160**, being in a receiving state. Blending unit **160** is then pivoted to the blending state and is operated to self wash and/or rinse. Blending unit **160** is then pivoted towards a waste disposal unit to dispose the content of container **162**. In an alternative architecture, to enable rinsing or washing of blender container **162**, a rotating sprinkler head is inserted into container **162**, container **162** being in the inverted position. An edible disinfectant may be used during the container washing step.

In embodiments of the present invention, control unit **180** includes a beverage quality assessment unit, which analyzes quality parameter such as the viscosity, temperature, texture, etc. of the flavored ice beverage being prepared and adjust the controls, as needed, to comply with the quality required from the selected flavored ice beverage.

In variations of the present invention, the pivotal position of blender **160** in the receiving state and the blending state is the same position.

It should be noted, that after completion of the preparation of the ice beverage, but prior to serving, the beverage maybe non-uniformly distributed within the cup. A typical issue is the presence of a conical top to the ice beverage, which may tend to easily spill if cup **170** is for example, held by small children. In order to overcome this problem, beverage cup **170** may be set on a vibrating platform, which vibrates cup **170** during or subsequent to the dispensing into cup **170**. Another feature that could be optionally added to apparatus **100** is an automated straw dispensing action at the end of the beverage preparation sequence.

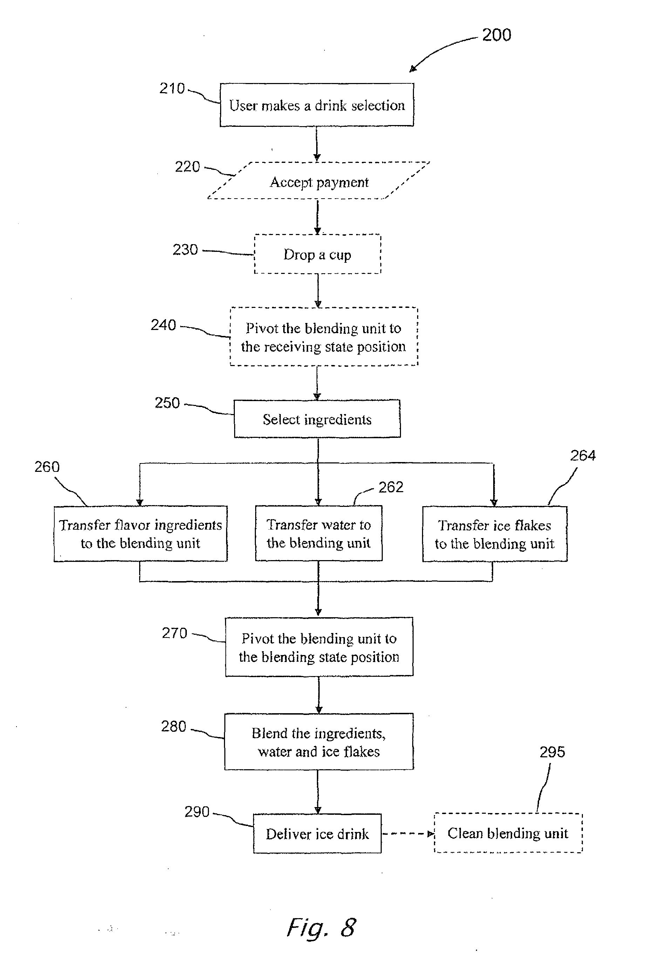

Reference is now made to Figure 8, which is a schematic flow diagram that outlines an example process **200** of preparing a made-to-order flavored ice beverage, from selection till delivery of the flavored ice beverage, using apparatus **100**, according to embodiments of the present invention. Process **200** starts by a user making a beverage selection, in step **210**. It should be noted that apparatus **100** may include just one optional ice beverage, in which case step **210** is skipped. If apparatus **100** is a payment-operated vending machine, the user makes a payment in step **220**, to commence an automatic process of preparing the selected flavored ice beverage. If apparatus **100** is a payment-operated vending machine, a cup **170** is dropped at a predetermined location in step **230**. Process **200** proceeds as follows:
Step **240**: Pivot blending unit **160** to the receiving state position.
   Control unit **180** pivots blending unit **160** to the receiving state position. Typically, blending unit **160** is set to an upwardly position, whereas opening **166** is aligned with the opening formed in ingredients receiving part **320**, of protective cover unit **300**.
**Step 250:** Select ingredients.
   Control unit **180** selects the one or more containers **122/1.26**, from which containers ingredients corresponding to the selected ice beverage.
**Step 260:** Transfer flavor ingredients to the blending unit.
   Control unit **180** activates transfer mechanism **128** and/or **129** to transfer a pre measured amount of flavor ingredients to blending unit **160**.
**Step 262**: Transfer water to the blending unit.
   Control unit **180** activates transfer mechanism **110** to transfer a pre measured amount of water to blending unit **160**.
**Step 264**: Transfer ice flakes to the blending unit.
   Control unit **180** activates ice flakes conveying mechanism **150** for transferring a pre measured amount of ice flakes **136** from ice flakes supplying unit **140** towards blender **160**.

It should be noted that steps **260**, **262** and **264** can be performed sequentially or in parallel.
**Step 270**: Pivot blending unit **160** to the blending state position.
   Preferably, control unit 180 pivots blending unit **160** about axis **165**, to form an inclination angle of β° with respect to the upright position. Sealer **350** of protective cover unit **300** seals opening **166** of blending unit **160**, when blending unit **160** is in the blending state position.
**Step 280**: Blend the ingredients, water and ice flakes.
   Control unit **180** activates water to blending unit **160** for a predetermined time interval, thereby producing the selected ice beverage. The controlled process of producing the selected ice beverage results in an ice beverage repeatably has substantially the same content, texture and flavor.
**Step 290**: Deliver ice beverage.
   Control unit **180** pivots blending unit **160** about axis **165**, towards cup **170** at a predesigned inclination angle, such that produced ice beverage is poured into cup **170**, substantially in its entirety, at a predetermined pouring rate.
**Step 295**: Clean blending unit **160**.
   Preferably, before resetting apparatus **100** to be ready for the next request for preparing a new made-to-order ice beverage, control unit **180** pivots blending unit logo about axis **165**, towards washing unit **190** which is activated to wash and/or rinse blending unit **160**.

It should be noted that some steps of process **200** can be activated in a different order, for example, steps **210** and **220** can be interchanged and step **230** can be at any time before delivering the ready to serve flavored ice beverage.

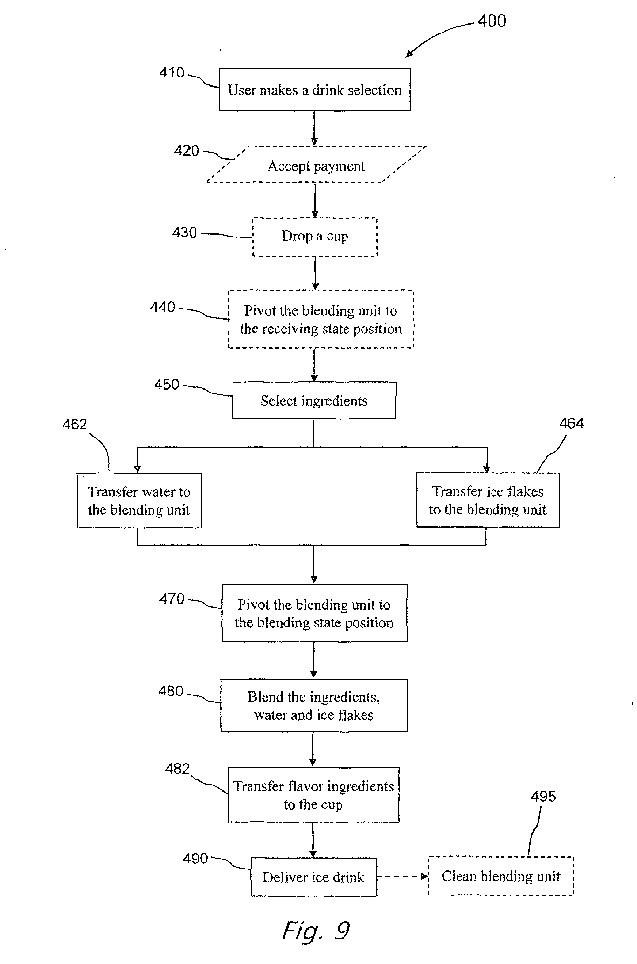

Reference is now made to Figure 9, which is a schematic flow diagram that outlines an example process **400** of preparing a made-to-order flavored ice beverage, from selection till delivery of the flavored ice beverage, using apparatus **100**, according to embodiments of the present invention. Process **400** starts by a. user making a beverage selection, in step **410**. It should be noted that apparatus **100** may include just one optional ice beverage, in which case step **410** is skipped. If apparatus **100** is a payment-operated vending machine, the user makes a payment in step **420**, to commence an automatic process of preparing the selected flavored ice beverage. If apparatus **100** is a payment-operated vending machine, a cup **170** i.s dropped at a predetermined location in step **430**. Process **400** proceeds as follows:
**Step 440**: Pivot blending unit **160** to the receiving state position.
   Control unit **180** pivots blending unit **160** to the receiving state position. Typically, blending unit **160** is set to an upwardly position, whereas opening **166** is aligned with the opening formed in ingredients receiving part **320**, of protective cover unit **300**.
**Step 450**: Select ingredients.
   Control unit **180** selects the one or more containers **122/126**, from which containers ingredients corresponding to the selected ice beverage.
**Step 462**: Transfer water to the blending unit.
   Control unit **180** activates transfer mechanism **110** to transfer a pre measured amount of water to blending unit **160**.
**Step 464**: Transfer ice flakes to the blending unit.
   Control unit **180** activates ice flakes conveying mechanism **150** for transferring a pre measured amount of ice flakes **136** from ice flakes supplying unit **140** towards blender **160**.

It should be noted that steps **462** and **464** can be performed sequentially or in parallel. **Step 470**: Pivot blending unit **160** to the blending state position.

Preferably, control unit **180** pivots blending unit **160** about axis **165**, to form an inclination angle of β° with respect to the upright position. Scaler **350** of protective cover unit **300** seals opening **166** of blending unit **160**, when blending unit **160** is in the blending state position.
**Step 480**: Blend the ingredients, water and ice flakes.
   Control unit **180** activates water to blending unit **160** for a predetermined time interval, thereby producing the selected ice beverage. The controlled process of producing the selected ice beverage results in a mixture having repeatably, substantially the same content and texture.
**Step 482**: Transfer flavor ingredients to cup **170**.
   Control unit **180** activates transfer mechanism **128** and/or **129** to transfer a pre measured amount of flavor ingredients directly to cup **170**. Typically but not limited to, in this embodiment, the flavor ingredients are in liquid form.
**Step 490**: Deliver ice beverage.
   Control unit **180** pivots blending unit **160** about axis **165**, towards cup **170** at a predesigned inclination angle, such that the produced ice beverage is poured into cup **170**, substantially in its entirety, at a predetermined pouring rate.
**Step 495**: Clean blending unit **160**.
   Preferably, before resetting apparatus **100** to be ready for the next request for preparing a new made-to-order ice beverage, control unit **180** pivots blending unit **160** about axis **165**, towards washing unit **190** which is activated to wash and/or rinse blending unit **160**.

It should be noted that some steps of process **400** can be activated in a different order, for example, steps **410** and **420** can be interchanged and step **430** can be at any time before delivering the ready to serve flavored ice beverage.

In embodiments of the present invention, apparatus **100** is set to produce and deliver the same flavor ice beverage. In this embodiment steps **210/410** and **250/450** are omitted from processes **200/400**, respectively.

In embodiments of the present invention, apparatus **100** is set to produce and deliver multiple flavored ice beverage portions to a single serving. For example, firstly, apparatus 100 produces and delivers a coffee flavored ice beverage, which fills a first portion of cup **170**. Secondly, apparatus **100** produces and delivers a vanilla flavored ice beverage, which is poured over the coffee flavored ice beverage portion, and generally fills the remaining space of cup **170**.

In embodiments of the present invention, the water supplied by water supply unit **110**, are sparkling water.

In embodiments of the present invention, the water supplied by water supply unit **110**, contain other liquids such as juice, fruit juice, milk, yogurt, alcoholic beverage or any other drinkable liquid.

In embodiments of the present invention, the action of ice dispensing and quantification is performed by the forming of ice cubes of specific size; the amount of ice which is dispensed by an ice dispenser is then controlled by discrete counting of the number of ice cubes of predetermined and controlled size. Such a system could also be configured in which the ice cubes fall onto a belt or conveyor system in which an electronic eye or any other discrete object counting mechanism is used to count out ice cubes.

In yet other embodiments, a multiple sectioned container is used in which each section contains a predefined quantity of ice flakes. In a further embodiment, ice flakes are created by freezing in free fall, akin to snow making machines. In this case, the ice flakes quantification mechanism could be either weight or volune measurement based, by either image processing or mechanical means. Other architectures are also envisaged in which alternative combinations of the above mentioned dispensing and quantification mechanisms are combined.

In variations of the present invention, water from water supply unit **110** is transferred to a mixer, whereas the ratio between the transferred ingredients from one or more containers **122**, as well as the water, is controlled by a computerized control unit **180**. The mixer mixes the various ingredients with the water and when ready, the mixture is transferred to blender **160**, where the mixture is blended with ice flakes **136**.

The invention being thus described in terms of embodiments and examples, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An apparatus (100) for preparing and dispensing a flavored ice beverage, comprising:
(a) at least one container (122, 126) for holding flavor ingredients;
(b) a blending unit (160) including a blender container (162) and a blending mechanism (164);
(c) an ice flakes supplying unit (140) comprising:
i. an ice flakes making device (130) for producing ice flakes (136);
ii. an ice flakes container;
iii. an ice flakes intermixing mechanism (146); and
iv. a conveying mechanism (150) for transferring said ice flakes (136) from said ice flakes holding and mixing unit to said blender container (162);
(d) a mechanism for transferring said flavor ingredients to said blender container (162);
(e) a computerized control unit for controlling one or more aspects of the process of producing said ice beverage,
wherein said ice flakes making device produces ice flakes (136) that are generally of similar dimensions;
wherein said ice flakes intermixing mechanism (146) intermixes said ice flakes (136) to maintain a substantially uniform mixture of said ice flakes (136) inside said ice flakes container, such that the lower part (144) of said ice flakes container is filled with said substantially uniform mixture of said ice flakes (136);
wherein said mechanism for transferring said flavor ingredients transfers said flavor ingredients from said containers (122, 126) for holding flavor ingredients, to said blender container (162);
wherein said conveying mechanism for transferring said ice flakes (136), transfers said ice flakes from said ice flakes holding and mixing unit, to said blender container (162); and **characterised in that** said blending mechanism (164) blends a pre-measured amount of said ice flakes (136), transferred from said ice flakes making unit, with a pre-measured amount of said flavor ingredients, transferred from said least one container (122, 126), thereby producing said flavored ice beverage;
wherein said controlled process of producing said ice beverage results in repeatably producing ice beverages having substantially the same content, texture and flavor;
wherein said controlled process is an automatic process for preparing a made-to-order flavored ice beverage, from selection till delivery of said flavored ice beverage; and
wherein said ice beverage is a substantially homogeneous mixture.

2. The apparatus (100) of claim 1 further comprises:
(a) a liquid supplier of a base liquid (110), preferably water or sparkling water; and
(b) a mechanism for transferring said base liquid to said blender container (162),
wherein said mechanism for transferring said base liquid, transfers said base liquid from said liquid supplier to said blender container (162); and
wherein said blending unit (160) blends a pre-measured amount of said ice flakes (136), transferred from said ice flakes making unit, with a pre-measured amount of said flavor ingredients, transferred from said least one container (122, 126), and a pre-measured amount of said base liquid, transferred from said supply of said base liquid, thereby producing said flavored ice beverage.

3. The apparatus (100) of claim 2 further comprises a temperature controlled refrigerated housing, said refrigerated housing wherein elements disposed therein include elements selected from the group including: said ice flakes supplying unit (140), said blending unit (160), said at least one container (122, 126) for holding said flavor ingredients and said liquid supplier.

4. The apparatus (100) of claim 1, wherein said blending unit (160) further comprises a pivoting mechanism (164), wherein said pivoting mechanism (164) facilitates pivotal motion of said blending unit (160).

5. The apparatus (100) of claim 1, wherein said ice flakes intermixing mechanism (146) comprises:
(a) a generally disc shaped rotating plate (148) having two faces and a rotational axis (141);
(b) disc rods extending generally perpendicular from said faces of said plate (148);
(c) wall rods (143, 147) extending generally perpendicular from the inner surfaces of the walls of said ice flakes container;
(d) openings formed on said plate (148), away from the rim of said plate (148), facilitating a movement of portions of said ice flakes (136) from one side of said plate (148) to the other side of said plate (148),
wherein said disc rods and wall rods (143, 147) have various dimensions; and
wherein a rotating mechanism rotates said plate (148), periodically, about said plate axis, in either direction.

6. The apparatus (100) of claim 1, wherein said ice flakes container comprises:
(a) a bottom surface (156) having a first end and a second end;
(b) an opening (158) formed at said first end of said bottom surface (156), facilitating the dispensing of said ice flake (136) from said ice flakes container; and
(c) an opening (154) formed at said second end of said bottom surface (156), facilitating the dispensing of accumulated water from said ice flakes container,
wherein said first end of said bottom surface (156) is higher than said second end of said bottom surface (156), thereby, water accumulated on said bottom surface (156) flows by the force of gravity towards said opening formed at said second end of said bottom surface (156).

7. The apparatus (100) of claim 6, wherein said water dispensed from said opening formed at said second end of said bottom surface (156), is collected to be reused by the apparatus (100) for preparing and dispensing a flavored ice beverage.

8. The apparatus (100) of claim 1, wherein said ice flakes container comprises a sensing device for sensing the level of accumulated ice flakes (136) inside said ice flakes container.

9. The apparatus (100) of claim 1 further comprises a protective cover unit (300) coupled to protect the surroundings of said blending unit (160), said blending unit (160) being in an operative state and wherein said protective cover unit (300) comprises a sealer (350), and wherein said sealer (350) seals said blending unit (160), said blending unit (160) being in said blending state position.

10. The apparatus (100) of claim 1 further comprises a washing unit (190) for rinsing and optionally washing the inner surfaces of said blender container (162).

11. The apparatus (100) of claim 1 further comprises a mixing unit for mixing said flavor ingredients and said base liquid, thereby producing a substantially homogeneous liquid mixture, wherein said blending unit (160) blends a pre-measured amount of said ice flakes (136) with a pre-measured amount of said liquid mixture thereby producing said flavored ice beverage.

12. The apparatus (100) of claim 1, wherein said conveying mechanism for transferring said ice flakes (136) comprises an Archimedes screw.

13. The apparatus (100) of claim 1 further includes elements selected from the group including: a vessel dispensing unit; and a straw dispensing unit and wherein the apparatus (100) is configured to function as a payment-operated vending machine.

14. A method for preparing and dispensing a flavored ice beverage, comprising the steps of:
(a) providing an apparatus (100) for preparing and dispensing a flavored ice beverage including:
i. an ice flakes supplying unit (140) for producing ice flakes (136);
ii. at least one container (122, 126) for holding flavor ingredients;
iii. a blending unit (160) including a blender container (162), a blending mechanism (164) and a pivoting mechanism (164), wherein said blender container (162) includes a receiving opening formed preferably at the top of said blender container (162), and wherein said pivoting mechanism (164) facilitates pivotal motion of said blending unit (160);
iv. a conveying mechanism for transferring said ice flakes (136) from said ice flakes supplying unit (140) to said blending unit (160);
v. a mechanism for transferring said flavor ingredients to said blending unit (160); and
vi. an ice flakes intermixing mechanism (146) for shuffling said ice flakes (136) in an ice flakes container,
(b) selecting a flavored ice beverage;
(c) activating said ice flakes intermixing mechanism (146) to shuffle said ice flakes (136) inside said ice flakes container;
(d) pivoting said blending unit (160) to a receiving state position, wherein at said receiving state position, said blending unit (160) is in position to receive said flavor ingredients and said ice flakes (136);
(e) transferring said flavor ingredients to said blending unit (160);
(f) transferring said ice flakes (136) to said blending unit (160);
(g) pivoting said blending unit (160) to a blending state position where said blending state is different from said receiving state, wherein at said blending state position, said blending unit (160) is preferably in an inclined position with respect to an upright position;
(h) activating said blending mechanism (164) for a predetermined time interval, thereby producing said ice beverage; and
(i) delivering said ice beverage, **characterised in that** said ice beverage is a substantially homogeneous mixture,
wherein said intermixing mechanism maintains a substantially uniform mixture of said ice flakes (136) inside said ice flakes container; wherein the method is an automatic process for preparing a made-to-order flavored ice beverage, from said selection step until said delivery step of the method so as to repeatably produce ice beverages having substantially the same content, texture and flavor.

15. The method of claim 14, wherein said provided apparatus (100) for preparing and dispensing a flavored ice beverage further includes a liquid supplier of a base liquid, preferably water, and a mechanism for transferring said base liquid to said blending unit (160), an ice flakes intermixing mechanism (146), includes a vessel dispensing unit, a straw dispensing unit, a vibrator operationally coupled to said blending unit (160), and a vibrator operationally coupled to a cup receiving platform, and wherein said method further comprises the steps of:
(i) transferring said base liquid to said blending unit (160), said blending unit (160) being at said receiving state position;
(j) activating said ice flakes intermixing mechanism (146) to shuffle said ice flakes (136) inside said ice flakes container, thereby maintaining a substantially uniform mixture of ice flakes (136) inside said ice flakes container;
(k) dispensing a cup from said vessel dispensing unit, before said delivering of said ice beverage;
(1) dispensing a straw from said straw dispensing unit, before said delivering of said ice beverage;
(m) pivoting said blending unit (160) towards said dispensed cup at a predesigned inclination angle, said pivoting being controlled by a control unit, such that said ice beverage is poured into said dispensed cup, substantially entirely, at a predetermined rate;
(n) activating said vibrating unit operationally coupled to said blending unit (160), to vibrate said blending unit (160) while said blending unit (160) is pivoted to said pouring state, to enhance fluidity of said ice beverage while said beverage is poured from said blending unit (160) to said dispensed cup;
(o) activating said vibrating unit operationally coupled to said cup receiving platform, to vibrate said dispensed cup while said ice beverage is being poured into said dispensed cup, so as to enhance uniform distribution of said ice beverage in said dispensed cup; and
(p) pivoting said blending unit (160) to a washing state, for washing said blending unit (160), after substantially all said ice beverage has been poured into said dispensed cup,
wherein apparatus (100) is payment-operated vending machine.

## Patentansprüche

1. Vorrichtung (100) zum Zubereiten und Ausgeben eines Eisgetränks mit Geschmack, die Folgendes umfasst:
(a) wenigstens einen Behälter (122, 126) zum Aufnehmen von Geschmackszutaten,
(b) eine Mischeinheit (160), die einen Mischerbehälter (162) und einen Mischmechanismus (164) einschließt,
(c) eine Eisflocken-Zufuhreinheit (140), die Folgendes umfasst:
i. eine Eisflocken-Herstellungsvorrichtung (130) zum Erzeugen von Eisflocken (136),
ii. einen Eisflockenbehälter,
iii. einen Eisflocken-Untermischmechanismus (146) und
iv. einen Fördermechanismus (150) zum Weiterleiten der Eisflocken (136) von der Eisflocken-Aufnahme- und -Mischeinheit zu dem Mischerbehälter (162),
(d) einen Mechanismus zum Weiterleiten der Geschmackszutaten zu dem Mischerbehälter (162),
(e) eine rechnergestützte Steuerungseinheit zum Steuern eines oder mehrerer Aspekte des Vorgangs des Erzeugens des Eisgetränks,
wobei die Eisflocken-Herstellungsvorrichtung Eisflocken (136) erzeugt, die im Allgemeinen ähnliche Abmessungen haben,
wobei der Eisflocken-Untermischmechanismus (146) die Eisflocken (136) untermischt, um ein im Wesentlichen gleichförmiges Gemisch der Eisflocken (136) innerhalb des Eisflockenbehälters aufrechtzuerhalten derart, dass der untere Teil (144) des Eisflockenbehälters mit dem im Wesentlichen gleichförmigen Gemisch der Eisflocken (136) gefüllt ist,
wobei der Mechanismus zum Befördern der Geschmackszutaten die Geschmackszutaten von den Behältern (122, 126) zum Aufnehmen von Geschmackszutaten zu dem Mischerbehälter (162) befördert,
wobei der Fördermechanismus zum Weiterleiten der Eisflocken (136) die Eisflocken von der Eisflocken-Aufnahme- und -Mischeinheit zu dem Mischerbehälter (162) weiterleitet und
**dadurch gekennzeichnet, dass** der Mischmechanismus (164) eine vordosierte Menge der Eisflocken (136), weitergeleitet von der Eisflocken-Herstellungsvorrichtung, mit einer vordosierten Menge der Geschmackszutaten, weitergeleitet von dem wenigstens einen Behälter (122, 126), mischt, wodurch das Eisgetränk mit Geschmack erzeugt wird,
wobei der gesteuerte Vorgang des Erzeugens des Eisgetränks dazu führt, das wiederholbar Eisgetränke erzeugt werden, die Inhalt, Textur und Geschmack aufweisen, die im Wesentlichen gleich sind,
wobei der gesteuerte Vorgang ein automatischer Vorgang zum Zubereiten eines auf Bestellung hergestellten Eisgetränks mit Geschmack, von der Auswahl bis zur Ausgabe des Eisgetränks mit Geschmack, ist und
wobei das Eisgetränk ein im Wesentlichen homogenes Gemisch ist.

2. Vorrichtung (100) nach Anspruch 1, die ferner Folgendes umfasst:
(a) eine Flüssigkeitsquelle einer Basisflüssigkeit (110), vorzugsweise Wasser oder Sprudelwasser,
(b) einen Mechanismus zum Weiterleiten der Basisflüssigkeit zu dem Mischerbehälter (162),
wobei der Mechanismus zum Weiterleiten der Basisflüssigkeit die Basisflüssigkeit von der Flüssigkeitsquelle zu dem Mischerbehälter (162) weiterleitet und
wobei die Mischeinheit (160) eine vordosierte Menge der Eisflocken (136), weitergeleitet von der Eisflocken-Herstellungsvorrichtung, mit einer vordosierten Menge der Geschmackszutaten, weitergeleitet von dem wenigstens einen Behälter (122, 126), und einer vordosierten Menge der Basisflüssigkeit, weitergeleitet von der Zufuhr der Basisflüssigkeit, mischt, wodurch das Eisgetränk mit Geschmack erzeugt wird.

3. Vorrichtung (100) nach Anspruch 2, die ferner ein temperaturgesteuertes gekühltes Gehäuse umfasst, wobei Elemente, die in dem gekühlten Gehäuse angeordnet sind, Elemente einschließen, die ausgewählt sind aus der Gruppe, die Folgendes einschließt: die Eisflocken-Zufuhreinheit (140), die Mischeinheit (160), den wenigstens einen Behälter (122, 126) zum Aufnehmen der Geschmackszutaten und die Flüssigkeitsquelle.

4. Vorrichtung (100) nach Anspruch 1, wobei die Mischeinheit (160) ferner einen Schwenkmechanismus (164) umfasst, wobei der Schwenkmechanismus (164) eine Schwenkbewegung der Mischeinheit (160) erleichtert.

5. Vorrichtung (100) nach Anspruch 1, wobei der Eisflocken-Untermischmechanismus (146) Folgendes umfasst:
(a) eine im Allgemeinen scheibenförmige sich drehende Platte (148), die zwei Flächen und eine Drehachse (141) hat,
(b) Scheibenstäbe, die sich im Allgemeinen senkrecht von den Flächen der Platte (148) erstrecken,
(c) Wandstäbe (143, 147), die sich im Allgemeinen senkrecht von den Innenflächen der Wände des Eisflockenbehälters erstrecken,
(d) Öffnungen, die an der Platte (148), weg von dem Rand der Platte (148), geformt sind, die eine Bewegung von Teilen der Eisflocken (136) von der einen Seite der Platte (148) zu der anderen Seite der Platte (148) erleichtern,
wobei die Scheibenstäbe und die Wandstäbe (143, 147) verschiedene Abmessungen haben und
wobei ein Drehmechanismus die Platte (148) periodisch in beiden Richtungen um die Plattenachse dreht.

6. Vorrichtung (100) nach Anspruch 1, wobei der Eisflockenbehälter Folgendes umfasst:
(a) eine Bodenfläche (156), die ein erstes Ende und ein zweites Ende hat,
(b) eine Öffnung (158), die an dem ersten Ende der Bodenfläche (156) geformt ist, die das Ausgeben der Eisflocken (136) aus dem Eisflockenbehälter erleichtert, und
(c) eine Öffnung (154), die an dem zweiten Ende der Bodenfläche (156) geformt ist, die das Ausgeben von gesammeltem Wasser aus dem Eisflockenbehälter erleichtert,
wobei das erste Ende der Bodenfläche (156) höher ist als das zweite Ende der Bodenfläche (156), wodurch das auf der Bodenfläche (156) gesammelte Wasser durch die Schwerkraft zu der an dem zweiten Ende der Bodenfläche (156) geformten Öffnung fließt.

7. Vorrichtung (100) nach Anspruch 6, wobei das aus der an dem zweiten Ende der Bodenfläche (156) geformten Öffnung ausgegebene Wasser aufgefangen wird, um durch die Vorrichtung (100) zum Zubereiten und Ausgeben eines Eisgetränks mit Geschmack wiederverwendet zu werden.

8. Vorrichtung (100) nach Anspruch 1, wobei der Eisflockenbehälter eine Abfühleinrichtung zum Abfühlen des Niveaus der gesammelten Eisflocken (136) innerhalb des Eisflockenbehälters umfasst.

9. Vorrichtung (100) nach Anspruch 1, die ferner eine schützende Abdeckungseinheit (300) umfasst, die zum Schützen der Umgebung der Mischeinheit (160) angekoppelt ist, wenn sich die Mischeinheit (160) in einem betriebsbereiten Zustand befindet, und wobei die schützende Abdeckungseinheit (300) ein Abdichtmittel (350) umfasst und wobei das Abdichtmittel (350) die Mischeinheit (160) abdichtet, wenn sich die Mischeinheit (160) in der Mischzustandsstellung befindet.

10. Vorrichtung (100) nach Anspruch 1, die ferner eine Wascheinheit (190) umfasst, um die Innenflächen des Mischerbehälters (162) zu spülen und wahlweise zu waschen.

11. Vorrichtung (100) nach Anspruch 1, die ferner eine Mischeinheit zum Mixen der Geschmackszutaten und der Basisflüssigkeit umfasst, wodurch ein im Wesentlichen homogenes Elüssigkeitsgemisch erzeugt wird, wobei die Mischeinheit (160) eine vordosierte Menge der Eisflocken (136) mit einer vordosierten Menge des Flüssigkeitsgemischs mischt, wodurch das Eisgetränk mit Geschmack erzeugt wird.

12. Vorrichtung (100) nach Anspruch 1, wobei der Fördermechanismus zum Weiterleiten der Eisflocken (136) eine Archimedische Schraube umfasst.

13. Vorrichtung (100) nach Anspruch 1, die ferner Elemente einschließt, die ausgewählt sind aus der Gruppe, die Folgendes einschließt: eine Gefäßausgabeeinheit und eine Trinkhalmausgabeeinheit, und wobei die Vorrichtung (100) dafür konfiguriert ist, als ein zahlungsbetätigter Verkaufsautomat zu fungieren.

14. Verfahren zum Zubereiten und Ausgeben eines Eisgetränks mit Geschmack, das die folgenden Schritte umfasst:
(a) das Bereitstellen einer Vorrichtung (100) zum Zubereiten und Ausgeben eines Eisgetränks mit Geschmack, die Folgendes einschließt:
i. eine Eisflocken-Zufuhreinheit (140) zum Erzeugen von Eisflocken (136),
ii. wenigstens einen Behälter (122, 126) zum Aufnehmen von Geschmackszutaten,
iii. eine Mischeinheit (160), die einen Mischerbehälter (162), einen Mischmechanismus (164) und einen Schwenkmechanismus (164) einschließt, wobei der Mischerbehälter (162) eine vorzugsweise am Oberteil des Mischerbehälters (162) geformte Aufnahmeöffnung einschließt und wobei der Schwenkmechanismus (164) eine Schwenkbewegung der Mischeinheit (160) erleichtert,
iv. einen Fördermechanismus zum Weiterleiten der Eisflocken (136) von der Eisflocken-Zufuhreinheit (140) zu der Mischeinheit (160),
v. einen Mechanismus zum Weiterleiten der Geschmackszutaten zu der Mischeinheit (160) und
vi. einen Eisflocken-Untermischmechanismus (146) zum Durcheinandermischen der Eisflocken (136) in einem Eisflockenbehälter,
(b) das Auswählen eines Eisgetränks mit Geschmack,
(c) das Aktivieren des Eisflocken-Untermischmechanismus (146), um die Eisflocken (136) innerhalb des Eisflockenbehälters durcheinanderzumischen,
(d) das Schwenken der Mischeinheit (160) zu einer Aufnahmezustandsstellung, wobei sich die Mischeinheit (160) in der Aufnahmezustandsstellung in einer Stellung befindet, um die Geschmackszutaten und die Eisflocken (136) aufzunehmen,
(e) das Weiterleiten der Geschmackszutaten zu der Mischeinheit (160),
(f) das Weiterleiten der Eisflocken (136) zu der Mischeinheit (160),
(g) das Schwenken der Mischeinheit (160) zu einer Mischzustandsstellung, wobei sich der Mischzustand von dem Aufnahmezustand unterscheidet, wobei sich die Mischeinheit (160) in der Mischzustandsstellung vorzugsweise in einer geneigten Stellung in Bezug auf eine aufrechte Stellung befindet,
(h) das Aktivieren des Mischmechanismus (164) für einen vorbestimmten Zeitraum, wodurch das Eisgetränk erzeugt wird, und
(i) das Ausgeben des Eisgetränks, **dadurch gekennzeichnet, dass** das das Eisgetränk ein im Wesentlichen homogenes Gemisch ist,
wobei der Eisflocken-Untermischmechanismus ein im Wesentlichen gleichförmiges Gemisch der Eisflocken (136) innerhalb des Eisflockenbehälters aufrechterhält, wobei der Vorgang ein automatischer Vorgang zum Zubereiten eines auf Bestellung hergestellten Eisgetränks mit Geschmack, von dem Auswahlschritt bis zu dem Ausgabeschritt des Verfahrens Geschmack, ist, um so wiederholbar Eisgetränke zu erzeugen, die Inhalt, Textur und Geschmack aufweisen, die im Wesentlichen gleich sind.

15. Verfahren nach Anspruch 14, wobei die bereitgestellte Vorrichtung (100) zum Zubereiten und Ausgeben eines Eisgetränks mit Geschmack ferner eine Flüssigkeitsquelle einer Basisflüssigkeit, vorzugsweise Wasser, und einen Mechanismus zum Weiterleiten der Basisflüssigkeit zu der Mischeinheit (160), einen Eisflocken-Untermischmechanismus (146) einschließt, eine Gefäßausgabeeinheit, eine Trinkhalmausgabeeinheit, einen Rüttler, der wirksam an die Mischeinheit (160) gekoppelt ist, und einen Rüttler, der wirksam an eine Becheraufnahmeplattform gekoppelt ist, einschließt und wobei das Verfahren ferner die folgenden Schritte umfasst:
(i) das Weiterleiten der Basisflüssigkeit zu der Mischeinheit (160), wobei sich die Mischeinheit (160) in der Aufnahmezustandsstellung befindet,
(j) das Aktivieren des Eisflocken-Untermischmechanismus (146), um die Eisflocken (136) innerhalb des Eisflockenbehälters durcheinanderzumischen, wodurch ein im Wesentlichen gleichförmiges Gemisch der Eisflocken (136) innerhalb des Eisflockenbehälters aufrechterhalten wird,
(k) das Ausgeben eines Bechers aus der Gefäßausgabeeinheit, vor dem Ausgeben des Eisgetränks,
(1) das Ausgeben eines Trinkhalms aus der Trinkhalmausgabeeinheit, vor dem Ausgeben des Eisgetränks,
(m) das Schwenken der Mischeinheit (160) zu dem ausgegebenen Becher hin in einem vorbestimmten Neigungswinkel, wobei das Schwenken durch eine Steuerungseinheit derart gesteuert wird, dass das Eisgetränk, im Wesentlichen vollständig, mit einer vorbestimmten Geschwindigkeit, in den ausgegebenen Becher gegossen wird,
(n) das Aktivieren der Rütteleinheit, die wirksam an die Mischeinheit (160) gekoppelt ist, um die Mischeinheit (160) zu rütteln, während die Mischeinheit (160) zu dem Gießzustand geschwenkt wird, um das Fließvermögen des Eisgetränks zu verbessern, während das Getränk aus der Mischeinheit (160) in den ausgegebenen Becher gegossen wird,
(o) das Aktivieren der Rütteleinheit, die wirksam an die Becheraufnahmeplattform gekoppelt ist, um den ausgegebenen Becher zu rütteln, während das Getränk in den ausgegebenen Becher gegossen wird, um so die gleichförmige Verteilung des Eisgetränks in dem ausgegebenen Becher zu verbessern, und
(p) das Schwenken der Mischeinheit (160) zu einem Waschzustand, um die Mischeinheit (160) zu waschen, nachdem im Wesentlichen das gesamte Eisgetränk in den ausgegebenen Becher gegossen worden ist,
wobei die Vorrichtung (100) ein zahlungsbetätigter Verkaufsautomat ist.

## Revendications

1. Appareil (100) pour la préparation et la distribution d'une boisson glacée aromatisée, comprenant :
(a) au moins un récipient (122, 126) pour contenir des ingrédients aromatisants ;
(b) une unité de mélange (160), englobant un récipient mélangeur (162) et un mécanisme de mélange (164) ;
(c) une unité d'alimentation de flocons de glace (140), comprenant :
i. un dispositif de production de flocons de glace (130) pour produire des flocons de glace (136) ;
ii. un récipient de flocons de glace ;
iii. un mécanisme de mélange des flocons de glace (146) ; et
iv. un mécanisme de transport (150), pour transférer lesdits flocons de glace (136) de ladite unité contenant et mélangeant les flocons de glace vers ledit récipient mélangeur (162);
(d) un mécanisme pour transférer lesdits ingrédients aromatisants vers ledit récipient mélangeur (162) ;
(e) une unité de commande informatisée, pour contrôler un ou plusieurs aspects du processus de production de ladite boisson glacée ;
dans lequel ledit dispositif de production des flocons de glace produit des flocons de glace (136) ayant en général des dimensions similaires ;
dans lequel ledit mécanisme de mélange des flocons de glace (146) mélange lesdits flocons de glace (136) pour maintenir un mélange pratiquement uniforme desdits flocons de glace (136) à l'intérieur dudit récipient des flocons de glace, de sorte que la partie inférieure (144) dudit récipient des flocons de glace est remplie dudit mélange pratiquement uniforme desdits flocons de glace (136) ;
dans lequel ledit mécanisme de transfert desdits ingrédients aromatisants assure le transfert desdits ingrédients aromatisants desdits récipients (122, 126) pour contenir les ingrédients aromatisants vers ledit récipient mélangeur (162) ;
dans lequel ledit mécanisme de transport, destiné à transférer lesdits flocons de glace (136), assure le transfert desdits flocons de glace de ladite unité contenant et mélangeant lesdits flocons de glace vers ledit récipient mélangeur (162) ; et
**caractérisé en ce que** ledit mécanisme de mélange (164) mélange une quantité pré-mesurée desdits flocons de glace (136), transférés à partir de ladite unité de préparation des flocons de glace, avec une quantité pré-mesurée desdits ingrédients aromatisants, transférés à partir dudit au moins un récipient (122, 126), pour produire ainsi ladite boisson glacée aromatisée ;
dans lequel ledit processus de production contrôlé de ladite boisson glacée résulte en une production répétée de boissons glacées ayant pratiquement un contenu, une texture et un arôme identiques ;
dans lequel ledit processus contrôlé est un processus automatique pour préparer une boisson glacée aromatisée faite sur demande, de la livraison à la délivrance de ladite boisson glacée aromatisée ; et
dans lequel ladite boisson glacée est un mélange pratiquement homogène.

2. Appareil (100) selon la revendication 1, comprenant en outre :
(a) un dispositif d'alimentation d'un liquide de base (110), de préférence de l'eau ou de l'eau gazeuse; et
(b) un mécanisme pour transférer ledit liquide de base vers ledit récipient mélangeur (162) ;
dans lequel ledit mécanisme de transfert dudit liquide de base assure le transfert dudit liquide de base dudit dispositif d'alimentation de liquide vers ledit récipient mélangeur (162) ; et
dans lequel ladite unité de mélange (160) mélange une quantité pré-mesurée desdits flocons de glace (136), transférés à partir de ladite unité de production de flocons de glace, avec une quantité pré-mesurée desdits ingrédients aromatisants, transférés à partir dudit au moins un récipient (122, 126), et une quantité pré-mesurée dudit liquide de base, transféré à partir dudit dispositif d'alimentation dudit liquide de base, pour produire ainsi ladite boisson glacée aromatisée.

3. Appareil (100) selon la revendication 2, comprenant en outre un boîtier réfrigéré à contrôle de la température, ledit boîtier réfrigéré contenant des éléments englobant des éléments sélectionnés dans le groupe englobant : ladite unité d'alimentation des flocons de glace (140), ladite unité de mélange (160), ledit au moins un récipient (122, 126) contenant lesdits ingrédients aromatisants et ledit dispositif d'alimentation de liquide.

4. Appareil (100) selon la revendication 1, dans lequel ladite unité de mélange (160) comprend en outre un mécanisme de pivotement (164), ledit mécanisme de pivotement (164) facilitant le déplacement pivotant de ladite unité de mélange (160).

5. Appareil (100) selon la revendication 1, dans lequel ledit mécanisme de mélange des flocons de glace (146) comprend :
(a) une plaque rotative ayant en général une forme en disque (148), comportant deux faces et un axe de rotation (141) ;
(b) des tiges du disque, s'étendant en général de manière perpendiculaire à partir desdites faces de ladite plaque (148) ;
(c) des tiges de paroi (143, 147), s'étendant en général de manière perpendiculaire à partir des surfaces internes des parois dudit récipient des flocons de glace ;
(d) des ouvertures formées dans ladite plaque (148), à l'écart du rebord de ladite plaque (148), facilitant un déplacement de parties desdits flocons de glace (136) d'un côté de ladite plaque (148) vers l'autre côté de ladite plaque (148) ;
dans lequel lesdites tiges de disque et lesdites tiges des parois (143, 147) ont différentes dimensions ; et
dans lequel un mécanisme de rotation fait tourner ladite plaque (148) de manière périodique autour dudit axe de la plaque, dans les deux sens.

6. Appareil (100) selon la revendication 1, dans lequel ledit récipient des flocons de glace comprend :
(a) une surface inférieure (156) comportant une première extrémité et une deuxième extrémité ;
(b) une ouverture (158), formée au niveau de ladite première extrémité de ladite surface inférieure (156), facilitant la distribution desdits flocons de glace (136) à partir dudit récipient des flocons de glace ; et
(c) une ouverture (154), formée au niveau de ladite deuxième extrémité de ladite surface inférieure (156), facilitant la distribution de l'eau accumulée à partir dudit récipient des flocons de glace ;
dans lequel ladite première extrémité de ladite surface inférieure (156) est plus haute que ladite deuxième extrémité de ladite surface inférieure (156), l'eau accumulée sur ladite surface inférieure (156) s'écoulant ainsi par la force de gravité vers ladite ouverture formée au niveau de ladite deuxième extrémité de ladite surface inférieure (156).

7. Appareil (100) selon la revendication 6, dans lequel ladite eau distribuée à partir de ladite ouverture formée au niveau de ladite deuxième extrémité de ladite surface inférieure (156) est collectée en vue de sa réutilisation par l'appareil (100) de préparation et de distribution d'une boisson glacée aromatisée.

8. Appareil (100) selon la revendication 1, dans lequel ledit récipient des flocons de glace comprend un dispositif capteur pour détecter le niveau des flocons de glace accumulés (136) à l'intérieur dudit récipient des flocons de glace.

9. Appareil (100) selon la revendication 1, comprenant en outre une unité de couverture protectrice (300), accouplée en vue de protéger l'entourage de ladite unité de mélange (160), ladite unité de mélange (160) se trouvant dans un état opérationnel, et dans lequel ladite unité de couverture protectrice (300) comprend un dispositif de scellement (350), ledit dispositif de scellement (350) assurant le scellement de ladite unité de mélange (160), lorsque ladite unité de mélange (160) se trouve dans ladite position de l'état de mélange.

10. Appareil (100) selon la revendication 1, comprenant en outre une unité de lavage (190), pour rincer et optionnellement pour laver les surfaces internes dudit récipient mélangeur (162).

11. Appareil (100) selon la revendication 1, comprenant en outre une unité de mélange pour mélanger lesdits ingrédients aromatisants et ledit liquide de base, pour produire ainsi une mélange liquide pratiquement homogène, ladite unité de mélange (160) mélangeant une quantité pré-mesurée desdits flocons de glace (136) avec une quantité pré-mesurée dudit mélange liquide, pour produire ainsi ladite boisson glacée aromatisée.

12. Appareil (100) selon la revendication 1, dans lequel ledit mécanisme de transport destiné à transférer lesdits flocons de glace (136) comprend une vis d'Archimède.

13. Appareil (100) selon la revendication 1, englobant en outre des éléments sélectionnés dans le groupe englobant : une unité de distribution de récipients ; et une unité de distribution de pailles, et dans lequel l'appareil (100) est configuré de sorte à fonctionner sous forme d'un distributeur automatique à actionnement par paiement.

14. Procédé de préparation et de distribution d'une boisson glacée aromatisée, comprenant les étapes ci-dessous :
(a) fourniture d'un appareil (100) de préparation et de distribution d'une boisson glacée aromatisée, englobant :
i. une unité d'alimentation de flocons de glace (140) pour produire des flocons de glace (136) ;
ii. au moins un récipient (122, 126) pour contenir des ingrédients aromatisants ;
iii. une unité de mélange (160), englobant un récipient mélangeur (162), un mécanisme de mélange (164) et un mécanisme de pivotement (164), dans lequel ledit récipient mélangeur (162) englobe une ouverture de réception formée de préférence au niveau de la partie supérieure dudit récipient mélangeur (162), et dans lequel ledit mécanisme de pivotement (164) facilite le déplacement pivotant de ladite unité de mélange (160) ;
iv. un mécanisme de transport pour transférer lesdits flocons de glace (136) de ladite unité d'alimentation des flocons de glace (140) vers ladite unité de mélange (160) ;
v. un mécanisme pour transférer lesdits ingrédients aromatisants vers ladite unité de mélange (160) ; et
vi. un mécanisme de mélange des flocons de glace (146) pour brasser lesdits flocons de glace (136) à l'intérieur dudit récipient de flocons de glace ;
(b) sélection d'une boisson glacée aromatisée ;
(c) activation dudit mécanisme de mélange des flocons de glace (146) pour brasser lesdits flocons de glace (136) à l'intérieur dudit récipient des flocons de glace ;
(d) pivotement de ladite unité de mélange (160) vers une position d'état de réception, dans lequel, dans ladite position de l'état de réception, ladite unité de mélange (160) se trouve dans une position prête à recevoir lesdits ingrédients aromatisants et lesdits flocons de glace (136) ;
(e) transfert desdits ingrédients aromatisants vers ladite unité de mélange (160) ;
(f) transfert desdits flocons de glace (136) vers ladite unité de mélange (160) ;
(g) pivotement de ladite unité de mélange (160) vers une position d'état de mélange, ledit état de mélange étant différent dudit état de réception, dans lequel, dans ladite position de l'état de mélange, ladite unité de mélange (160) se trouve de préférence dans une position inclinée par rapport à une position verticale ;
(h) activation dudit mécanisme de mélange (164) pendant un intervalle de temps prédéterminé, pour produire ainsi ladite boisson glacée ; et
(i) distribution de ladite boisson glacée, **caractérisé en ce que** ladite boisson glacée est un mélange pratiquement homogène ;
dans lequel ledit mécanisme de mélange maintient un mélange pratiquement uniforme desdits flocons de glace (136) à l'intérieur dudit récipient des flocons de glace ; dans lequel le procédé est un processus automatique pour préparer une boisson glacée aromatisée faite sur demande, à partir de ladite étape de sélection jusqu'à ladite étape de distribution du procédé, de sorte à produire de manière répétée des boissons glacées ayant pratiquement un contenu, une texture et un arôme identiques.

15. Procédé selon la revendication 14, dans lequel ledit appareil (100) fourni pour la préparation et la distribution d'une boisson glacée aromatisée englobe en outre un dispositif d'alimentation d'un liquide de base, de préférence de l'eau, et un mécanisme pour transférer ledit liquide de base vers ladite unité de mélange (160), un mécanisme de brassage des flocons de glace (146), englobe une unité de distribution de récipients, une unité de distribution de pailles, un vibrateur accouplé en service à ladite unité de mélange (160), et un vibrateur accouplé en service à une plate-forme de réception de gobelets, ledit procédé comprenant en outre les étapes ci-dessous :
(i) transfert dudit liquide de base vers ladite unité de mélange (160), ladite unité de mélange (160) se trouvant dans ladite position de l'état de réception ;
(j) activation dudit mécanisme de mélange des flocons de glace (146) pour brasser lesdits flocons de glace (136) à l'intérieur dudit récipient des flocons de glace, pour maintenir ainsi un mélange pratiquement uniforme des flocons de glace (136) à l'intérieur dudit récipient des flocons de glace ;
(k) distribution d'un gobelet à partir de ladite unité de distribution de récipients, avant ladite distribution de ladite boisson glacée ;
(l) distribution d'une paille à partir de ladite unité de distribution de pailles, avant ladite distribution de ladite boisson glacée ;
(m) pivotement de ladite unité de mélange (160) vers ledit gobelet distribué à un angle d'inclinaison prédéterminé, ladite étape de pivotement étant contrôlée par une unité de commande, de sorte que ladite boisson glacée est versée dans ledit gobelet distribué, de manière pratiquement complète, à un débit prédéterminé ;
(n) activation de la dite unité vibratoire, accouplée opérationnellement à ladite unité de mélange (160), pour faire vibrer ladite unité de mélange (160) pendant que ladite unité de mélange (160) est pivotée vers ledit état de versement, afin d'améliorer la fluidité de ladite boisson glacée pendant que ladite boisson est versée de ladite unité de mélange (160) dans ledit gobelet distribué ;
(o) activation de ladite unité vibratoire, accouplée optionnellement à ladite plate-forme de réception des gobelets, pour faire vibrer ledit gobelet distribué pendant que ladite boisson glacée est versée dans ledit gobelet distribué, afin d'améliorer la distribution uniforme de ladite boisson glacée dans ledit gobelet distribué ; et
(p) pivotement de ladite unité de mélange (160) vers un état de lavage, pour laver ladite unité de mélange (160) après le versement de pratiquement l'ensemble de ladite boisson glacée dans ledit gobelet distribué ;
dans lequel l'appareil (100) est un distributeur autoamtique actionné par paiement.
